# EUROPÄISCHE PATENTSCHRIFT

(11) **EP 0 583 597 B1**
(45) Veröffentlichungstag und Bekanntmachung des Hinweises auf die Patenterteilung: **24.04.1996**
(21) Anmeldenummer: 93110975.5
(22) Anmeldetag: 09.07.1993
(51) Int. Cl.: B60G 17/027, B60G 11/46, F16F 1/26

(54) **Anlenkung einer starren Vorderachse, insbesondere eines Nutzfahrzeuges**
Linkage for a rigid front axle, in particular for utility vehicles
Articulation pour un essieu avant rigide, en particulier pour véhicules utilitaires

(30) Priorität: 20.08.1992 AT 1675/92
(43) Veröffentlichungstag der Anmeldung: 23.02.1994
(73) Patentinhaber: STEYR NUTZFAHRZEUGE AG, A-4400 Steyr (AT)
(72) Erfinder: Steyrl, Hans, A-4400 Steyr (AT)

(56) Entgegenhaltungen:
- EP-A- 0 413 318
- EP-A- 0 435 142
- DE-A- 1 505 340
- FR-A- 2 633 220
- GB-A- 2 219 773
- US-A- 1 350 110
- US-A- 1 528 481
- US-A- 1 796 235
- US-A- 2 550 074
- US-A- 2 711 314

## Beschreibung

Die Erfindung betrifft eine Anlenkung einer starren Vorderachse, insbesondere eines Nutzfahrzeuges, deren Achskörper auf beiden Fahrzeugseiten jeweils im Mittelbereich einer Blattfeder festgelegt sowie dort an einer in zwei Stellungen - eine Fahrstellung für Aufbau-Normallage und eine Liftstellung für Aufbau-Anhebung - einstellbaren Luftfeder abgestützt ist, wobei die Blattfeder mit ihrem Vorderende an einem rahmenfesten Federlager angelenkt und mit ihrem Hinterende über ein dort sowie am Rahmen angelenktes Zwischenglied geführt ist.

Eine derartige Vorderachs-Anlenkung ist beispielsweise aus der DE 41 12 213 C1 bekannt. Die dort verwendete Blattfeder ist mit ihrem Vorderende an einem rahmenfesten Federlager angelenkt und an ihrem Hinterende über ein dort sowie am Rahmen angelenktes Zwischenglied geführt, das durch eine in sich starre Schwinge gebildet ist, die sich im wesentlichen vertikal erstreckt. Aufgrund einer derartigen Einspannung der Blattfeder ist seitens der Druckluftanlage des Fahrzeuges für das Anheben des Fahrzeugaufbaus über die im Mittelbereich der Blattfeder über dem Achskörper der Vorderachse angeordnete Luftfeder Luft mit relativ hohem Druck bereitzustellen, weil dabei nicht nur das Gewicht des Fahrzeugaufbaues, sondern auch die Kraft der entsprechend durchzubiegenden Blattfeder zu überwinden ist. Es kann bei dieser bekannten Anordnung jedoch davon ausgegangen werden, daß die durch ein einziges Federblatt realisierte Blattfeder im Hinblick auf ihre Führungseigenschaften nicht sonderlich stabil ausgebildet ist, d.h. eine vergleichsweise weiche Federcharakteristik aufweist, denn es ist ihr zur Verbesserung des Führungsverhaltens ein über ihr mit Abstand angeordneter Längslenker zugeordnet. Dadurch verteuert und verkompliziert sich der Aufwand für die Vorderachs-Anlenkung.

Es ist daher Aufgabe der Erfindung, ausgehend von der bekannten Lösung eine Anlenkung für die Vorderachse zu schaffen, die ohne zusätzliche Längslenker auskommt, trotzdem aber mindestens ein gleich gutes Fahrverhalten ermöglicht und darüberhinaus das Liften des Fahrzeugaufbaues über die Luftfeder mit geringerem Druck ermöglicht.

Diese Aufgabe ist erfindungsgemäß durch eine Vorderachs-Anlenkung mit den im Anspruch 1 angegebenen Merkmalen gelöst.

Dadurch, daß die Blattfeder gemäß einem ersten erfindungsgemäßen Merkmal im Hinblick auf die Aufnahme aller Längs- und Querführungskräfte, mithin stabil und mit harter Federcharakteristik ausgelegt ist, kann auf den beim eingangs diskutierten Stand der Technik notwendigen zusätzlichen Längslenker verzichtet werden. Aufgrund dieser stabilen Ausgestaltung der Blattfeder, die vorzugsweise durch eine 2-Blatt-Parabelfeder realisiert ist, war es, um der zweiten aufgabengemäßen Forderung nach Reduzierung des für das Liften notwendigen Luftdruckes Rechnung zu tragen, notwendig, das am Hinterende dieser Blattfeder dort sowie am Rahmen angelenkte Zwischenglied nicht wie beim eingangs diskutierten Stand der Technik als starre Schwinge auszugestalten. Dieser Notwendigkeit wurde durch die erfindungsgemäße Ausgestaltung des Zwischengliedes in Form eines zweischenkligen Kniehebels Rechnung getragen, dessen beide über ein Gelenk miteinander verbundene, V-förmig zueinander angeordnete Schenkel bei in Fahrstellung befindlicher Luftfeder und Blattfeder über eine ihnen zugeordnete fernsteuerbare Verriegelungseinrichtung gegenseitig in enger V-Stellung zur Bildung eines dann starren Kniehebels arretierbar sind, jedoch dann, wenn der Fahrzeugaufbau geliftet werden soll, entriegelbar und dann gegeneinander frei beweglich in eine weiter geöffnete V-Stellung überführbar sind. Das heißt, im verriegelten Zustand bildet der Kniehebel eine starre Schwinge, über die die Blattfeder bei in Fahrstellung befindlichem Fahrzeug-Aufbau exakt quer- und längsgeführt ist. Nach Entriegelung des Kniehebels wird dieser beim Liften des Fahrzeug-Aufbaues infolge der in eine weiter geöffnete V-Stellung übergehenden Schenkel quasi verlängert, so daß durch die der Luftfeder zugeführte Druckluft praktisch nur das Gewicht des Fahrzeug-Aufbaues zu überwinden ist.

Vorteilhafte Ausgestaltungen der erfindungsgemäßen Lösung sind in den abhängigen Unteransprüchen angegeben.

Nachstehend ist die erfindungsgemäße Lösung anhand eines in der Zeichnung dargestellten Ausführungsbeispieles noch näher erläutert. In der Zeichnung zeigen:
- Fig. 1: die Anlenkung einer starren Vorderachse schematisch in Seitenansicht bei in Fahrstellung befindlichen Teilen,
- Fig. 2: die Vorderachs-Anlenkung gemäß Fig. 1 bei geliftetem Fahrzeug-Aufbau,
- Fig. 3: den erfindungsgemäßen Kniehebel in Alleinstellung sowie in Seitenansicht und in Verriegelungsstellung,
- Fig. 4: eine Ansicht des Kniehebels gemäß Fig. 3 von rechts,
- Fig. 5: den Kniehebel gemäß Fig. 3 in entriegelter und aufgeweiteter Position seiner Schenkel, wie bei maximaler Liftposition des Fahrzeugaufbaues gegeben, und
- Fig. 6: eine Ansicht des entriegelten Kniehebels gemäß Fig. 5 von rechts.

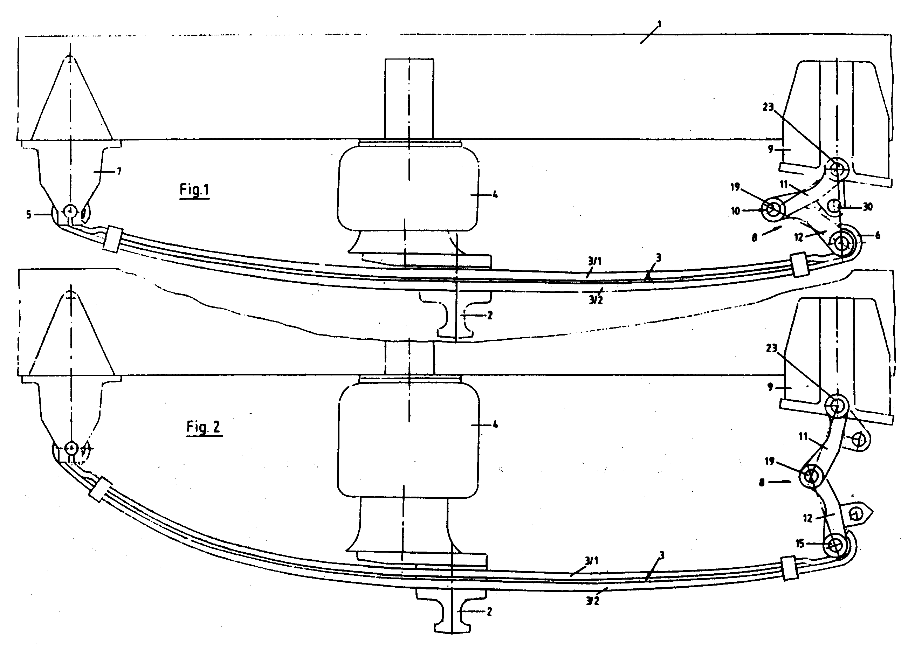

In Fig. 1 und 2 ist vom Aufbau des Fahrzeuges, insbesondere Nutzfahrzeuges, der Übersichtlichkeit wegen nur ein Rahmen-Längsträger 1 dargestellt, der ein Teil des mit dem Aufbau fest verbundenen Fahrzeugrahmens bildet. Außerdem ist in Fig. 1 und 2 nur jener Bereich des Fahrzeuges dargestellt, wie er im Bereich der starren Vorderachse gegeben und für das Verständnis der erfindungsgemäßen Anlenkung derselben notwendig ist. Der Achskörper 2 der starren Vorderachse ist auf beiden Fahrzeugseiten jeweils im Mittelbereich einer Blattfeder 3 festgelegt sowie dort an einer Luftfeder 4 abgestützt, die oben am Rahmen-Längsträger 1 festgelegt ist. Die Luftfeder 4 ist in nicht dargestellter Weise an das fahrzeuginterne Druckluftsystem angeschlossen und kann zwei Stellungen einnehmen, nämlich eine Fahrstellung für Aufbau-Normallage während des normalen Fahrbetriebes (siehe Fig. 1) und eine Liftstellung für Aufbau-Anhebung (siehe Fig. 2), wobei der Hubweg beim Litten zwischen Fahrstellung und maximaler Liftstellung bei einem Nutzfahrzeug etwa 150 mm beträgt. Die Blattfeder 3 ist im Hinblick auf die Aufnahme aller Längs- und Querführungskräfte, somit stabil und mit harter Federcharakteristik ausgelegt und vorzugsweise durch eine aus zwei Federblättern 3/1, 3/2 zusammengesetzte Parabelfeder gebildet. Die Blattfeder 3 weist an ihrem Vorderende und Hinterende jeweils ein eingerolltes Federauge 5 bzw. 6 auf und ist mit ihrem am Vorderende gegebenen Federauge 5 an einem rahmenfesten Federlager - Lagerbock 7 - seitlich exakt geführt angelenkt. Mit dem an ihrem Hinterende gegebenen Federauge 6 ist die Blattfeder 3 am unteren Ende eines zweischenkligen Kniehebels 8 exakt quer- und längsgeführt angelenkt. Der Kniehebel 8 ist an seinem oberen Ende an einem rahmenfesten Lagerbock 9 exakt seitengeführt drehbeweglich angelenkt. Im einzelnen besteht der Kniehebel 8 aus Zwei über ein Gelenk 10 miteinander verbundenen, V-förmig zueinander angeordneten Schenkeln 11, 12, die bei in Fahrstellung befindlicher Luftfeder 4 und Blattfeder 3 über eine ihnen zugeordnete fernsteuerbare Verriegelungseinrichtung 13 (siehe Fig. 4) gegenseitig in enger V-Stellung (siehe Fig. 1, 3, 4) zur Bildung eines dann starren, wie eine feste Schwinge wirkenden Kniehebels 8 arretierbar sind, jedoch für eine Überführung des Fahrzeugaufbaus von Fahrstellung in Littstellung entriegelbar und dann gegeneinander frei beweglich in eine weiter geöffnete V-Stellung (siehe Fig. 2, 5, 6) überführbar sind.

Die Schenkel 11, 12 des Kniehebels 8 erstrecken sich in der die Blattfeder 3 einschließenden Längs-Hoch-Ebene mit der V-Spitze zur Luftfeder 4 hinweisend.

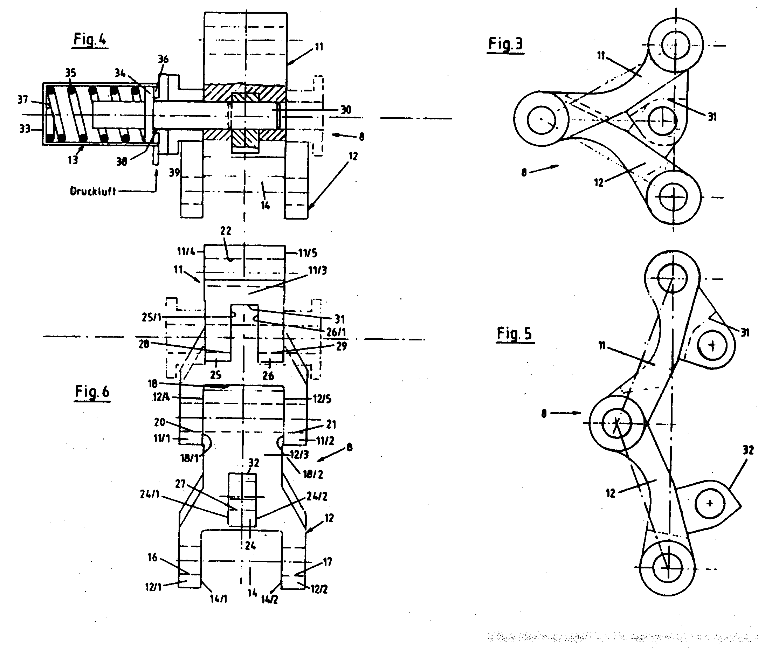

Der Kniehebel 8 ist nach Art einer massiven Doppellasche ausgebildet, auf entsprechende Details ist nachfolgend unter Bezugnahme auf die Fig. 3 bis 6 näher eingegangen, wobei alle nachfolgend aufgeführten Bezugszeichen der Übersichtlichkeit wegen nur in Fig. 5 eingetragen sind.

Der untere Kniehebel-Schenkel 12 weist an seinem einen freien Ende ein beidseitig durch Laschen 12/1, 12/2 mit planparallelen Innenflächen 14/1, 14/2 begrenztes Maul 14 auf, in dem das eingerollte Blattfeder-Hinterende 6 seitlich fixiert aufgenommen und über einen querdurchgehenden Bolzen 15 drehbeweglich befestigt ist. Letzterer durchdringt dabei zwei in den Laschen 12/1, 12/2 gegebene, zueinander fluchtende Lagerbohrungen 16, 17. Andernendes weist der untere Kniehebel-Schenkel 12 einen Steg 12/3 mit planparallelen Außenflächen 12/4, 12/5 auf, mit dem er in einem beidseitig durch Laschen 11/1, 11/2 mit planparallelen Innenflächen 18/1, 18/2 begrenzten Maul am einen Ende des oberen Kniehebel-Schenkels 11 seitlich fixiert aufgenommen sowie dort über eine quer durchgehende Achse 19 gelenkig an letzterem (11) befestigt ist. Zur Hindurchführung der Achse 19, die Teil des Gelenkes 10 ist, sind in den beiden Laschen 11/1, 11/2 zwei zueinander fluchtende Durchgangsbohrungen 20, 21 gegeben. An seinem dem Maul 18 gegenüberliegenden Endbereich weist der obere Kniehebel-Schenke) 11 einen Steg 11/3 mit planparallelen Außenflächen 11/4, 11/5 und einer Querdurchgangsbohrung 22 auf, mit dem er am Haltebock 9 quer fixiert sowie über eine die Querdurchgangsbohrung 22 durchsetzende Lagerachse 23 drehbeweglich angelenkt ist. Darüber hinaus sind an beiden Kniehebel-Schenkeln 11, 12 in den V-förmigen Innenbereich hineinragende Verriegelungslaschen 24, 25, 26 gegeben, und zwar eine (24) mit planparallelen Außenflächen 24/1, 24/2 am einen Schenke) 12 bzw. 11 und zwei (25, 26) am anderen Schenke) 11 bzw. 12, die mit ihren einander zugewandten planparallelen Innenflächen 25/1, 26/1 im Verriegelungsfall die am anderen Schenkel gegebene Verriegelungslasche 24 übergreifen. Die Verriegelungslaschen 24, 25, 26 weisen jeweils eine quer durchgehende Bohrung 27, 28, 29 auf, welche im Verriegelungsfall zueinander fluchten und von einem Arretierungsbolzen 30 durchdrungen sind. Außerdem ist an einem der beiden Kniehebel-Schenkel 11, 12 ein Anschlag gegeben, der die in Verriegelungsstellung des Kniehebels 8 gegebene enge V-Stellung der beiden Schenkel 11, 12 begrenzt. Im dargestellten Ausführungsbeispiel ist dieser Anschlag durch eine zwischen den beiden Verriegelungslaschen 25, 26 des einen Kniehebel-Schenkels 11 gegebene Anschlagfläche 31 realisiert, an der die eine am anderen Kniehebel-Schenkel gegebene Verriegelungslasche 24 mit einer entsprechenden Stirnfläche 32 in Verriegelungsposition des Kniehebels 8 zur Anlage kommt.

Der vorstehend erwähnte Arretierungsbolzen 30 ist Teil der Verriegelungseinrichtung 13 und innerhalb eines an einem der Kniehebel-Schenkel 11 bzw. 12 befestigten Druckzylinders 33 über einen an ihm gegebenen bzw. mit ihm verbundenen Druckteller 34 von einer Druckfeder 35 permanent in Richtung Verriegelungsposition beaufschlagt. Aus dieser gut aus Fig. 4 ersichtlichen Verriegelungsposition ist der Arretierungsbolzen 30 zur Entriegelung des Kniehebels 8 über ein in einen durch den Druckzylinder 33 und den Druckteller 34 begrenzten Druckraum 36 eingeleitetes und ihn entgegen der Kraftrichtung der Druckfeder 35 bewegendes Druckmittel, insbesondere Druckluft, in Entriegelungsstellung überführbar. Die Entriegelungsstellung des Arretierungsbolzens 30 wird dabei vorzugsweise durch den hinteren Boden 37 des Druckzylinders 33 begrenzt, während die Verriegelungsstellung des Arretierungsbolzens 30 durch einen entweder frontseitig des Drucktellers 34 oder innenseitig des vorderen Bodens des Druckzylinders 33 gegebenen Anschlag 38 vorgegeben ist.

Vorzugsweise ist zum Entriegeln des Kniehebels 8 der Druckraum 36 im Druckzylinder 33 über eine Druckleitung 39 aus dem auch das Befüllen der Luftfeder 4 für ein Aufbau-Litten versorgenden Druckluftsteuersystem des Fahrzeugs mit Druckluft beaufschlagbar. Diese Druckbeaufschlagung des Druckraumes 36 kann auf einen durch Betätigung eines elektrischen Schalters im bzw. am Fahrzeug vom Fahrer aus gelösten Befehl für Aufbau-Litten hin mit zeitlichem Vorlauf vor der Befüllung der Luftfeder 4 erfolgen, wobei der Liftvorgang erst nach sensormäßig erfaßter vollständiger Entriegelung des Kniehebels 8 beginnen kann. Für das Auslösen der Entriegelung des Kniehebels 8 kann im bzw. am Fahrzeug jedoch auch ein eigener Schalter vorgesehen sein, durch den nach entsprechender Betätigung die Druckluftbeaufschlagung des Druckraumes 36 ausgelöst wird. In diesem Fall ist das Litten des Fahrzeug-Aufbaues durch einen weiteren, vom Fahrer zu betätigenden Schalter auslösbar, wobei jedoch der eigentliche Littvorgang erst dann in Gang gesetzt wird, wenn vorher die vollständige Entriegelung des Kniehebels 8 sensormäßig erfaßt und an die Druckluftsteuereinrichtung gemeldet ist.

## Patentansprüche

1. Anlenkung einer starren Vorderachse, insbesondere eines Nutzfahrzeuges, deren Achskörper (2) auf beiden Fahrzeugseiten jeweils im Mittelbereich einer Blattfeder (3) festgelegt sowie dort an einer in zwei Stellungen - eine Fahrstellung für Aufbau-Normallage und eine Littstellung für Aufbau-Anhebung - einstellbaren Luftfeder (4) abgestützt ist, wobei die Blattfeder (3) mit ihrem Vorderende an einem rahmenfesten Federlager (7) angelenkt und mit ihrem Hinterende über ein dort sowie am Rahmen (1) angelenktes Zwischenglied (8) geführt ist, dadurch gekennzeichnet, daß die Blattfeder (3; 3/1, 3/2) im Hinblick auf die Aufnahme aller Längs- und Querführungskrätte, mithin stabil und mit harter Federcharakteristik ausgelegt ist, und daß das Zwischenglied durch einen zweischenkligen Kniehebel (8) gebildet ist, dessen beide über ein Gelenk (10; 19) miteinander verbundene, V-förmig zueinander angeordnete Schenke) (11, 12) bei in Fahrstellung befindlicher Luftfeder (4) und Blattfeder (3; 3/1, 3/2) über eine ihnen zugeordnete fernsteuerbare Verriegelungseinrichtung (13; 30) gegenseitig in enger V-Stellung zur Bildung eines dann starren Kniehebels (8) arretierbar, jedoch für Überführung des Aufbaus in Liftstellung entriegelbar und dann gegeneinander frei beweglich in eine weiter geöffnete V-Stellung überführbar sind.

2. Vorderachs-Anlenkung nach Anspruch 1, dadurch gekennzeichnet, daß sich die beiden Schenke) (11, 12) des Kniehebels (8) in der die Blattfeder (3; 3/1, 3/2) einschließenden Längs-Hoch-Ebene mit der V-Spitze zur Luftfeder (4) hinweisend erstrecken.

3. Vorderachs-Anlenkung nach Anspruch 1, dadurch gekennzeichnet, daß der Kniehebel (8) nach Art einer massiven Doppellasche ausgebildet ist.

4. Vorderachs-Anlenkung nach einem der vorhergehenden Ansprüche, dadurch gekennzeichnet, daß der untere Kniehebel-Schenkel (12) an seinem einen freien Ende ein beidseitig durch Laschen (12/1, 12/2) mit planparallelen Innenflächen (14/1, 14/2) begrenztes Maul (14), in dem das eingerollte Blattfeder-Hinterende (6) seitlich fixiert aufgenommen und über einen quer durchgehenden Bolzen (15) befestigt ist, und andernendes einen Steg (12/3) mit planparallelen Außenflächen (12/4, 12/5) aufweist, mit dem er in einem beidseitig durch Laschen (11/1, 11/2) mit planparallelen Innenflächen (18/1, 18/2) begrenzten Maul (18) am einen Ende des oberen Kniehebel-Schenkels (11) seitlich fixiert aufgenommen sowie dort über eine quer durchgehende Achse (19) gelenkig an letzterem befestigt ist, und daß der obere Kniehebel-Schenkel (11) an seinem dem Maul (18) gegenüberliegenden Endbereich einen Steg (11/3) mit planparallelen Außenflächen (11/4, 11/5) und Querdurchgangsbohrung (22) aufweist, mit dem er an einem rahmenfesten Haltebock (9) quer fixiert und über eine die Querdurchgangsbohrung (22) durchdringende Lagerachse (23) drehbeweglich angelenkt ist.

5. Vorderachs-Anlenkung nach Anspruch 4, dadurch gekennzeichnet, daß an beiden Kniehebel-Schenkeln (11, 12) in den V-förmigen Innenbereich derselben hineinragende Verriegelungslaschen (24, 25, 26) - eine (24) mit planparallelen Außenflächen (24/1, 24/2) an einem (12 bzw. 11) und zwei (25, 26) miteinander zugewandten planparallelen Innenflächen (25/1, 26/1), die die Verriegelungslasche (24) des einen Schenkels im Verriegelungsfalle übergreifen - gegeben sind, und daß die Verriegelungslaschen (24, 25, 26) quer durchgehende Bohrungen (27, 28, 29) aufweisen, die im Verriegelungsfall zueinander fluchten und von einem Arretierungsbolzen (30) durchdrungen sind.

6. Vorderachs-Anlenkung nach Anspruch 5, dadurch gekennzeichnet, daß an einem der beiden Kniehebel-Schenkeln (11, 12) ein Anschlag gegeben ist, der die in Verriegelungsstellung gegebene enge V-Stellung der beiden Kniehebel-Schenkel (11, 12) begrenzt.

7. Vorderachs-Anlenkung nach Anspruch 6, dadurch gekennzeichnet, daß der Anschlag durch eine zwischen den beiden Verriegelungslaschen (25, 26) des einen Kniehebel-Schenkels (12 bzw. 11) gegebene Anschlagfläche (31) realisiert ist, an der die am anderen Kniehebel-Schenkel gegebene Verriegelungslasche (24) mit einer an ihr gegebenen Stirnfläche (32) in Verriegelungsstellung zur Anlage kommt.

8. Vorderachs-Anlenkung nach Anspruch 5, dadurch gekennzeichnet, daß der Arretierungsbolzen (30) Teil der Verriegelungseinrichtung (13) und innerhalb eines Druckzylinders (33) über einen Druckteller (34) von einer Druckfeder (35) permanent in Richtung Verriegelungsposition beaufschlagt ist, aus dieser Verriegelungsposition zur Entriegelung des Kniehebels (8) aber über ein in einen durch den Druckzylinder (33) und den Druckteller (34) begrenzten Druckraum (36) eingeleitetes und ihn entgegen der Kraftrichtung der Druckfeder (35) bewegendes Druckmittel, insbesondere Druckluft, in Entriegelungsstellung überführbar ist.

9. Vorderachs-Anlenkung nach Anspruch 8, dadurch gekennzeichnet, daß der Druckzylinder 33 an einem der Kniehebel-Schenkel (11 bzw. 12) befestigt ist.

10. Vorderachs-Anlenkung nach Anspruch 8, dadurch gekennzeichnet, daß der Druckraum (36) im Druckzylinder (33) zur Entriegelung des Kniehebels (8) aus dem auch das Befüllen der Luftfeder (4) für Aufbau-Litten versorgenden Druckluftsteuersystem mit Druckluft beaufschlagbar ist.

11. Vorderachs-Anlenkung nach Anspruch 10, dadurch gekennzeichnet, daß die Druckbeaufschlagung des Druckraumes (36) auf einen durch Betätigung eines elektrischen Schalters im bzw. am Fahrzeug vom Fahrer aus gelösten Befehl für Aufbau-Litten hin mit zeitlichem Vorlauf vor der Befüllung der Luftfeder (4) erfolgt, wobei der Littvorgang erst nach sensormäßig erfaßter vollständiger Entriegelung des Kniehebels (8) beginnen kann.

12. Vorderachs-Anlenkung nach Anspruch 1, dadurch gekennzeichnet, daß die Blattfeder (3) durch eine 2-Blatt-Parabelfeder (3/1, 3/2) gebildet ist.

## Claims

1. An articulation system of a rigid front axle, in particular of a commercial vehicle, the axle body (2) thereof being fixed, on both respective sides of the vehicle, in the middle of a leaf spring (3) and being supported there on a pneumatic spring (4) adjustable into two positions, one driving position for the normal position of the vehicle body and a lifted position for raising the vehicle body, wherein the front end of the leaf spring (3) is articulated to a spring bearing (7) secured to the frame, and the rear end thereof extends by way of an intermediate member (8) articulated thereto and to the frame (1), **characterised in that** the leaf spring (3; 3/1, 3/2) is designed to receive all longitudinal and lateral guide forces, and is consequently stable and has stiff spring-like properties, and that the intermediate member is in the form of a two-legged elbow lever (8), and - when the pneumatic spring (4) and leaf springs (3; 3/1, 3/2) are in the driving position - the legs (11, 12) of the elbow lever connected to each other by way of a joint (10; 19) and arranged with respect to each other to form a V are both mutually lockable in a confined V position to form a subsequently rigid elbow lever (8) by way of a remote-controllable locking device (13; 30) associated with the legs, but are both unlockable for moving the vehicle body into the lifted position, and subsequently when freely moveable with respect to each other are displaceable into a more widely open V position.

2. A front axle articulation system according to Claim 1, **characterised in that** the two legs (11, 12) of the elbow lever (8) extend with the V tip pointing towards the pneumatic spring (4) in the longitudinal and elevated plane enclosing the leaf springs (3, 3/1, 3/2).

3. A front axle articulation system according to Claim 1, **characterised in that** the elbow lever (8) is formed like an enormous double shackle.

4. A front axle articulation system according to any one of the preceding claims, **characterised in that** the free end of the lower elbow lever leg (12) has a jaw (14) bounded on each side by side-members (12/1, 12/2) with parallel inner surfaces (14/1, 14/2), and the inwardly curled rear end (6) of the leaf spring is received so as to be laterally locked in the jaw and is fastened by way of a transversely penetrating bolt (15), and the other end of the lower elbow leg has a cross-member (12/3) having parallel outer surfaces (12/4, 12/5) and used to receive the lower elbow lever leg so that it is laterally locked in a jaw (18) bounded on both sides by side-members (11/1, 11/2) with parallel inner surfaces (18/1, 18/2) and at one end of the upper elbow lever leg (11), and is flexibly fastened thereto by way of a transversely penetrating pin, (19), and that the end region of the upper elbow lever leg (11) opposite the jaw (18) has a cross-member (11/3) with parallel outer surfaces (11/4, 11/5) and a transverse through bore (22), and the upper elbow lever leg is attached transversely by the cross-member, and rotatably articulated by way of a bearing pin (23) penetrating the transverse through bore (22) to a supporting bracket (9) secured to the frame.

5. A front axle articulation system according to Claim 4, **characterised in that** there are inwardly projecting locking members (24, 25, 26) on both elbow lever legs (11, 12) in the V-shaped interior thereof, a locking member (24) with parallel outer surfaces (24/1, 24/2) on one elbow lever leg (12 or 11), and two locking members (25, 26) with parallel inner surfaces (25/1, 26/1) facing each other and engaging over the locking member (24) of one leg during locking, and that the locking members (24, 25, 26) have transverse through bores (27, 28, 29) aligned with each other during locking and penetrated by a locking bolt (30).

6. A front axle articulation system according to Claim 5, **characterised in that** there is a stop on one of the two elbow lever legs (11, 12) and it bounds the confined V position, present in the locking position, of the two elbow lever legs (11, 12).

7. A front axle articulation system according to Claim 6, **characterised in that** the stop is produced by a stop surface (31) present between the two locking members (25, 26) of one elbow lever leg (12 or 11), and when locked the locking member (24) present on the other elbow lever leg comes to rest on the said stop surface with an end surface (32) provided on the locking member (24).

8. A front axle articulation system according to Claim 5, **characterised in that** the locking bolt (30), part of the locking means (13) and inside a pressure cylinder (3), is acted upon, by way of a pressure plate (34) by a compressed spring (35), permanently in the direction of the locking position, and is slidable from this locking position for unlocking the elbow lever (8) into an unlocking position but by way of a pressure medium, in particular pressurised air, which is fed into a pressure space (36) bounded by the pressure cylinder (33) and the pressure plate (34) and which moves the said bolt against the direction of force of the compressed spring (35).

9. A front axle articulation system according to Claim 8, **characterized in that** the pressure cylinder 33 is fastened to one of the elbow lever legs (11 or 12).

10. A front axle articulation system according to Claim 8, **characterised in that** the pressure space (36) in the pressure cylinder (33) for unlocking the elbow lever (8) can be acted upon with pressurised air from the pressurised-air control system also providing for the filling of the pneumatic springs (4) for lifting the vehicle body.

11. A front axle articulation system according to Claim 10, **characterised in that** the pressure space (36) is acted upon with pressure by a command, triggered by the driver actuating an electric switch in or on the vehicle, for lifting the vehicle body prior to the pneumatic springs (4) being filled, wherein lifting cannot commence until there has been complete unlocking, determined by sensors, of the elbow lever (8).

12. A front axle articulation system according to Claim 1, **characterised in that** the leaf spring (3) is formed by a 2-leaf parabolic-spring (3/1, 3/2).

## Revendications

1. Montage articulé d'un essieu avant rigide, notamment d'un véhicule utilitaire dont le corps d'essieu (2) est soutenu des deux côtés du véhicule chaque fois dans la zone médiane d'un ressort lame (3) et par un ressort pneumatique (4), réglage dans l'une des deux positions (position de circulation pour l'assiette normale de la carrosserie et position de relevage pour le soulèvement de la carrosserie), le ressort lame (3) étant articulé par son extrémité avant sur un palier de ressort (7) solidaire du châssis et par son extrémité arrière, par un élément intermédiaire (8) également articulé au châssis (1), en guidant le ressort lame, caractérisé en ce que le ressort lame (3, 3/1, 3/2) est conçu pour être solide et avoir une caractéristique de ressort dure pour recevoir tous les efforts de guidage longitudinaux et transversaux et en ce que l'élément intermédiaire est formé par un levier à genouillère (8) à deux branches dont les deux branches (11, 12) faisant entre elles une forme de V sont reliées par une articulation (10, 19), pour la position de circulation du ressort pneumatique (4), le ressort lame (3, 3/1, 3/2) se bloquant dans une position en forme de V refermée constituant un levier à genouillère (8) rigide, verrouillé par une installation de verrouillage télécommandée (13, 30), associée, mais qui pour faire passer la carrosserie en position relevée se déverrouille, les branches du levier à genouillère étant alors libres en mouvement pour prendre une forme de V plus largement ouverte.

2. Montage articulé de l'essieu avant selon la revendication 1, caractérisé en ce que les deux branches (11, 12) du levier à genouillère (8) s'étendent avec la pointe du V en direction du ressort pneumatique (4) dans le plan vertical longitudinal passant par les ressorts lames (3, 3/1, 3/2).

3. Montage articulé de l'essieu avant selon la revendication 1, caractérisé en ce que le levier à genouillère (8) est réalisé sous la forme d'une double patte massive.

4. Montage articulé de l'essieu avant selon l'une des revendications précédentes, caractérisé en ce que la branche inférieure (12) du levier à genouillère, comporte à son extrémité libre une mâchoire (14) délimitée des deux côtés par des pattes (12/1, 12/2) à surfaces intérieures (14/1, 14/2) planes parallèles, mâchoire recevant l'extrémité arrière (6) roulée du ressort lame en la fixant latéralement, la liaison étant faite par un goujon transversal (15), et à son autre extrémité, il est prévu une âme (12/3) à surfaces extérieures (12/4, 12/5) planes parallèles, âme par laquelle il est logé en étant bloqué latéralement dans une mâchoire (18) délimitée des deux côtés par des pattes (11/1, 11/2) à surfaces intérieures (18/1, 18/2) planes parallèles, à une extrémité de la branche supérieure (11) du levier à genouillère, en y étant fixé de manière articulée par un axe traversant (19) et la branche supérieure (11) du levier à genouillère comporte dans sa zone d'extrémité en regard de la mâchoire (18) une âme (11/3) à surfaces extérieures planes parallèles (11/4, 11/5) et perçage transversal traversant (22) par lequel il est fixé transversalement à un bloc de palier (9) solidaire du châssis et est articulé de manière mobile en rotation autour d'un axe de palier (23) traversant le perçage transversal (22) .

5. Montage articulé d'un essieu avant selon la revendication 4, caractérisé par des pattes de verrouillage (24, 25, 26) sur les deux branches (11, 12) du levier à genouillère et pénétrant dans la zone intérieure de la forme en V (l'une des pattes 24 ayant des surfaces extérieures planes parallèles 24/1, 24/2 sur l'une des branches 12 ou 11 et deux pattes 25, 26 avec des surfaces intérieures 25/1, 26/1 planes parallèles tournées l'une vers l'autre, venant prendre par-dessus la patte de verrouillage 24 de l'autre branche en position de verrouillage) et les pattes de verrouillage (24, 25, 26) comportent des perçages traversant (7, 28, 29) transversaux, qui en position de verrouillage sont alignés et sont traversés par un goujon de blocage (30).

6. Montage articulé de l'essieu avant selon la revendication 5, caractérisé en ce que sur l'une des deux branches (11, 12) du levier à genouillère, il y a une butée qui limite la position V, refermée, correspondant à la position de verrouillage pour les deux branches (11, 12) du levier à genouillère.

7. Montage articulé de l'essieu avant selon la revendication 6, caractérisé en ce que la butée est réalisée par une surface de butée (31) venant entre les deux pattes de verrouillage (25, 26) d'une branche (12, 11) du levier à genouillère, butée contre laquelle vient en appui par sa surface frontale correspondante (32), la patte de verrouillage (24) de l'autre branche du levier à genouillère, en position de verrouillage.

8. Montage articulé de l'essieu avant selon la revendication 5, caractérisé en ce que le goujon de blocage (30) fait partie d'une installation de verrouillage (13) et est dans un cylindre de compression (33) sollicité en permanence dans la direction de verrouillage par un ressort de compression (35) par l'intermédiaire d'une coupelle de poussée (34), et il est conduit hors de sa position de verrouillage vers le déverrouillage du levier à genouillère (8) par une chambre de pression (36) délimitée entre le cylindre de pression (33) et la coupelle de pression (34), alimentée par un fluide sous pression, notamment de l'air comprimé, qui déplace le goujon dans la direction opposée de celle de la force développée par le ressort de compression (35) pour passer en position de déverrouillage.

9. Montage articulé de l'essieu avant selon la revendication 8, caractérisé en ce que le cylindre de compression (33) est fixé à l'une des branches (11, 12) du levier à genouillère.

10. Montage articulé de l'essieu avant selon la revendication 8, caractérisé en ce que la chambre de compression (36) du cylindre de compression (33) est alimentée en air comprimé pour déverrouiller le levier à genouillère (8) à partir du système de commande d'air comprimé remplissant le ressort pneumatique (4) pour le soulèvement de la carrosserie.

11. Montage articulé de l'essieu avant selon la revendication 10, caractérisé en ce que la mise en pression de la chambre de compression (36) se fait par la commande d'un commutateur électrique prévu dans ou sur le véhicule, actionné par le conducteur, en déclenchant un ordre de soulèvement de la carrosserie, en précédant dans le temps le remplissage du ressort pneumatique (4), l'opération de soulèvement ne pouvant commencer que lorsque le déverrouillage du levier à genouillère (8) a été détecté comme étant terminé par un capteur.

12. Montage articulé de l'essieu avant selon la revendication 1, caractérisé en ce que le ressort lame (3) est constitué par deux lames de ressort de forme parabolique (3/1, 3/2).
